Europäisches Patentamt

European Patent Office

Office européen des brevets

(19)

(11) Veröffentlichungsnummer: **0 231 898 B1**

(12) **EUROPÄISCHE PATENTSCHRIFT**

(45) Veröffentlichungstag der Patentschrift: **10.06.92**

(51) Int. Cl.⁵: **F16F 13/00**

(21) Anmeldenummer: **87101280.3**

(22) Anmeldetag: **30.01.87**

(54) **Hydraulisch dämpfendes Lager.**

(30) Priorität: **03.02.86 US 825500**

(43) Veröffentlichungstag der Anmeldung:
**12.08.87 Patentblatt 87/33**

(45) Bekanntmachung des Hinweises auf die
Patenterteilung:
**10.06.92 Patentblatt 92/24**

(84) Benannte Vertragsstaaten:
**DE ES FR GB IT SE**

(56) Entgegenhaltungen:
**EP-A- 0 072 262**
**EP-A- 0 156 697**
**DE-A- 3 019 337**
**DE-A- 3 502 539**

(73) Patentinhaber: **LORD CORPORATION**
**2000 West Grandview Boulevard P.O. Box**
**10038**
**Erie Pennsylvania 16514-0038(US)**

(72) Erfinder: **Marjoram, Robert H.**
**3604 Woodhaven Drive**
**Erie Pennsylvania 16506(US)**

(74) Vertreter: **Michelis, Theodor, Dipl.-Ing. et al**
**Seibert + Michelis Rechtsanwälte und Pa-**
**tentanwälte Tattenbachstrasse 9**
**W-8000 München 22(DE)**

# Beschreibung

Die Erfindung bezieht sich auf ein hydraulisch dämpfendes Lager mit einer zumindest teilweise von einer gummielastischen Wandung umgebenen Arbeitskammer und einer Ausgleichskammer, die mit einer hydraulischen Flüssigkeit gefüllt sind und zwischen denen eine Zwischenplatte aus einem einstückigen, elastomeren Grundkörper mit einem radial außenliegenden, dickeren Bereich und einem zentralen, bis auf die Dicke einer integralen Membran eingezogenen Bereich, am äußeren Umfang eingespannt ist und einen kreisbogenförmigen Überströmkanal zur hydraulischen Verbindung der beiden Kammern aufweist.

Ein derartiges Lager, wie es insbesondere zur Abstützung und Schwingungsdämpfung von Kraftfahrzeugmotoren Anwendung findet, ist beispielsweise aus der EP-A-72 262 bekannt. Bei diesem Lager besteht die gesamte Zwischenplatte aus einem einstückigen elastomeren Grundkörper. Dieser wird durch einen wulstförmigen dicken Außenbereich und einen dünnen Zentralbereich zur Bildung einer gewellten Membran gebildet, wobei der Überströmkanal zwischen den beiden Kammern durch das äußere Gehäuse des Lagers und einen entsprechenden Rückschnitt am Außenumfang der Zwischenplatte gebildet wird.

Ein weiteres Lager zur Abstützung und Schwingungsdämpfung von Kraftfahrzeugmotoren zeigt beispielsweise die DE-A-30 19 337. Die Zwischenplatte dieses Lagers weist einen schmalen, langgezogenen Überströmkanal auf, wobei in das Lager eingeleitete Schwingungen, die sich auf die Flüssigkeit in diesem Kanal übertragen, Trägheitseffekte erzeugen, die dem Lager bei bestimmten Erregerfrequenzen eine spezielle Betriebscharakteristik geben, wie etwa eine niedrige, dynamische Steifigkeit und/oder eine hohe Dämpfung. Mit der zentral in der Zwischenplatte angeordneten Entkopplungsvorrichtung, die aus einer elastischen Membran besteht, oder aber auch als vertikal geringfügig frei bewegliche Scheibe ausgebildet sein kann, wird eine unzweckmäßig hohe Versteifung des Lagers vermieden, insbesondere wenn die Anregungsschwingungen eine so kleine Amplitude und eine so hohe Frequenz aufweisen, daß nur ein kleiner oder gar kein Flüssigkeitsaustausch zwischen den Kammern des Lagers über den Überströmkanal hin stattfindet.

Die eigentliche Zwischenplatte ist - bis auf die Entkopplungsmembran - aus Metall oder einem anderen starren Werkstoff, wie Kunststoff, ausgebildet und fest mit dem Lagergehäuse verbunden. Dadurch wird eine Durchbiegung oder Verformung der Zwischenplatte und des Überströmkanals vermieden, da sonst die Betriebscharakteristik des Lagers unerwünscht verändert würde. Nachteilig ist dabei, daß die beweglichen Teile der Entkopplungsvorrichtung gesondert von der eigentlichen Zwischenplatte hergestellt und anschließend mit dieser verbunden werden müssen. Dabei ist bei Verwendung einer Membran zur Montage am starren Teil der Zwischenplatte eine Klemm- oder eine Haftverbindung erforderlich, die einen erheblichen Herstellungsaufwand beinhalten. Dabei hat sich aber auch herausgestellt, daß bei Zwischenplatten mit haftend verbundenen Membranen durch die Hydraulikflüssigkeit, im allgemeinem einem Gemisch aus Wasser und Glykol, die Haftverbindung abgebaut werden kann und damit die Funktionsfähigkeit stark eingeschränkt ist.

Bei einem weiteren bekannten Lager gemäß der EP-A-156 697 besteht die Zwischenplatte zwischen der Arbeitskammer und der Ausgleichskammer im wesentlichen aus einer metallischen, innerhalb der Membran angeordneten Platte, die am Umfang eingespannt ist und einer darauf aufgesetzten, einen kleineren Außendurchmesser aufweisenden Membran mit einem verdickten Randbereich. Eine weitere, ober halb der Membran angeordnete Platte, die den gleichen Durchmesser wie die Membran aufweist, dient nicht zur Einspannung dieser Membran, sondern lediglich zur Wegbegrenzung für Auslenkungen der Membran und kann demgemäß auch - wie im vorletzten Absatz der Beschreibung dieser Druckschrift ausgeführt - weggelassen werden. Der Überströmkanal zwischen den beiden Kammern wird dabei durch einen Rückschnitt im unteren Ende der Tragfeder und dem Außenumfang der Membran gebildet.

Der vorliegenden Erfindung liegt daher die Aufgabe zugrunde, ein Lager zu schaffen, dessen Zwischenplatte mit Entkopplungsvorrichtung einfacher herzustellen ist und dabei keinerlei Beschränkungen an Lebensdauer oder Funktionsfähigkeit unterworfen ist.

Zur Lösung dieser Aufgabe ist erfindungsgemäß vorgesehen, daß im äußeren, verdickten und scheibenförmig ausgebildeten Bereich des elastomeren Grundkörpers in eine seiner parallelen Oberflächen eine den Überströmkanal bildende nutförmige Ausnehmung eingelassen ist und daß dieser außenliegende, verdickte Bereich von zwei ringscheibenförmigen Platten derart überdeckt ist, daß eine der Platten auch die nutförmige Ausnehmung überdeckt und damit den Überströmkanal begrenzt, wobei beide Platten eine zentrale Ausnehmung von mindestens dem Durchmesser der Membran aufweisen und im verdickten Bereich eine die Durchbiegung des Überströmkanalbereichs verhindernde Verstärkung bilden, und daß in eine der Platten im Bereich der Ausnehmung eine Überströmöffnung zur Arbeitskammer und in die andere Platte eine Überströmöffnung zur Ausgleichskammer eingelassen sind, wobei letztere Überströmöffnung sich an einen Durchbruch im zwischen der Platte und dem Grund der Ausnehmung liegenden Elastomerbereich anschließt.

Im Gegensatz zum vorstehend erörterten Stand der Technik besteht beim Erfindungsgegenstand die Zwischenplatte vollständig aus einem einstückigen elastomeren Grundkörper, der am Umfang eingespannt ist und allein zur Versteifung im radial außenliegenden Bereich von ringförmigen Platten überdeckt wird. In eine der Oberflächen dieses elastomeren Grundkörpers ist dabei eine kreisförmige Ausnehmung eingeschnitten, die von einer der Ringplatten abgedeckt ist und damit den Überströmkanal bildet.

Mit einer derartigen einstückigen Ausbildung der Zwischenplatte mit integraler Membran ist eine sehr einfache Herstellung bei optimaler Funktionstüchtigkeit gegeben.

Zweckmäßigerweise können in die Überströmöffnungen schräg geneigte und bis zum Boden des Überströmkanals reichende Leitvorrichtungen eingesetzt sein. Diese Leitvorrichtungen können auf einfache Weise durch das auf drei Seiten freigeschnittene und schräg nach innen gebogene Material der jeweiligen Plattenöffnung gebildet sein.

Die nutförmige Ausnehmung kann sich kreisringförmig über 360° erstrecken, wobei die in die Ausnehmung ragenden Leitvorrichtungen zwischen sich die Länge des Überströmkanals begrenzen.

Die Länge des Überströmkanals kann darüber hinaus durch die relative Lage der Platten in Umfangsrichtung zueinander bestimmt werden.

Zweckmäßigerweise weist die elastomere Zwischenplatte radial von innen nach außen einen zentralen, dünnen Membranbereich, einen verdickten Bereich mit der nutförmigen Ausnehmung und mit je einem ringförmigen, wulstförmigen Dichtungsvorsprung im an die Membran angrenzenden Bereich, einen Einspannbereich verminderter Dicke und einen radial außenliegenden, wulstförmigen Dichtungsbereich auf.

Die entsprechend abgestuft profilierten ringscheibenförmigen Platten überdecken zweckmäßigerweise radial den Einspannbereich und den verdickten Bereich bis einschließlich den wulstförmigen Dichtungsvorsprüngen, wobei die Platten dann am Außenumfang zwischen zwei umgebörtelten Kanten des Lagergehäuses einspannbar sind.

Zur exakten Beabstandung der beiden Platten kann radial innenliegend zum Überströmkanal in den Elastomerkörper ein umlaufender, metallischer Versteifungsring mit über seinen Umfang verteilten, radialen Durchbrüchen und mit gleicher Höhe wie der Elastomerkörper einvulkanisiert sein.

Anhand einer schematischen Zeichnung sind Aufbau und Wirkungsweise eines Ausführungsbeispiels nach der Erfindung näher erläutert. Dabei zeigen

Fig. 1  einen Längsschnitt durch ein Lager;
Fig. 2  einen Horizontalschnitt durch das Lager entsprechend der Schnittlinie 2-2 nach Fig. 1 mit teilweise weggebrochenen Komponenten;
Fig. 3  einen vergrößerten Teilschnitt entsprechend der Schnittlinie 3-3 nach Fig. 2 im Bereich der Ein- und Austrittsöffnungen;
Fig. 4  eine Aufsicht auf den elastomeren Grundkörper der Zwischenplatte;
Fig. 5  einen Teillängsschnitt durch die elastomere Zwischenplatte entsprechend der Schnittlinie 5-5 nach Fig. 4 und
Fig. 6  einen Teilschnitt durch eine andere Ausführungsform der Entkopplungsvorrichtung.

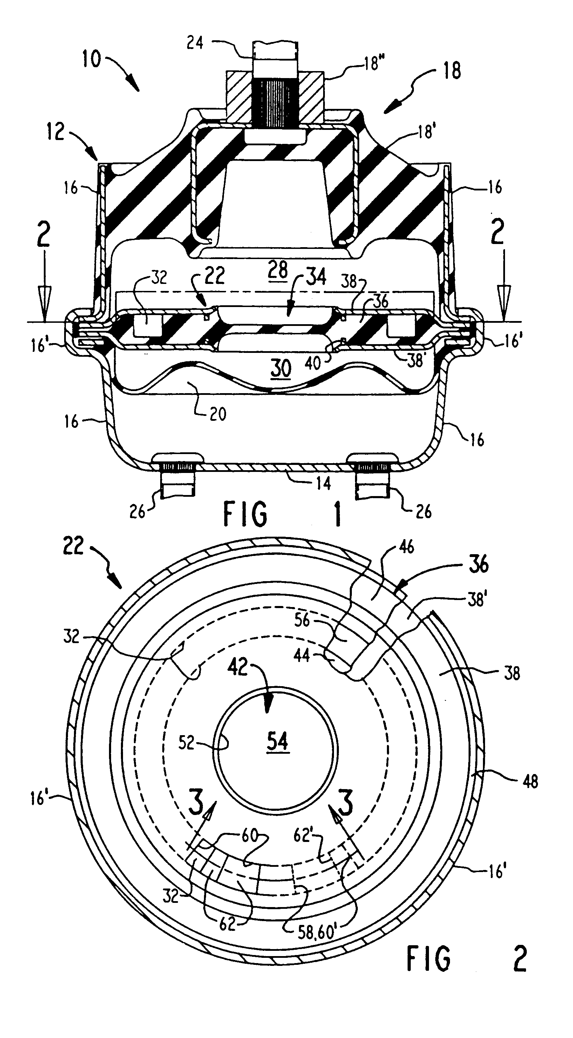

Nach Fig. 1 weist das Lager 10 innerhalb eines topförmigen Gehäuses 12 mit zylindrischen Wandungsteilen 16 und einer Bodenplatte 14 in herkömmlicher Weise eine Arbeitskammer 28 und eine Ausgleichskammer 30 auf, die hydraulisch über einen in einer Zwischenplatte 22 angeordneten Überströmkanal 32 miteinander in Verbindung stehen. Die Arbeitskammer 28 ist dabei auf der Oberseite von einer Wandung 18 mit einem gummielastischen Elastomerkörper 18' und einer Lagerplatte 18'' mit dem Anschlußbolzen 24 zur Halterung des nicht näher dargestellten Motors abgeschlossen. Die Ausgleichskammer 30 ist auf der Unterseite von einer balgartigen flexiblen Wandung 20 begrenzt und durch die äußere starre Wandung 16 und 14 mit weiteren Montagebolzen 26 gegen mechanische Beschädigungen geschützt.

Beide Kammern sind mit einer geeigneten Hydraulikflüssigkeit, wie etwa einer Wasser-Glykol-Gemisch, gefüllt und stehen über den Überströmkanal 32 miteinander in Verbindung. Darüber hinaus weist die Zwischenplatte 22 eine zentrale Entkopplungsmembran 34 auf, auf die im einzelnen noch später eingegangen wird.

Wie aus Fig. 1 und den Fig. 2 bis 5 der Zeichnung zu ersehen ist, weist die Zwischenplatte 22 einen einstückig geformten, elastomeren Grundkörper 36 auf, der auf seinen Außenseiten zwischen zwei ringscheibenförmigen Platten 38 und 38' als Verstärkung eingespannt ist. Dieser kreisscheibenförmige, elastomere Grundkörper weist einen zentralen Entkopplungsabschnitt 42, einen relativ dicken Zwischenabschnitt bzw. Überströmkanalabschnitt 44, einen relativ dünnen äußeren Montageabschnitt 46 und einen außenliegenden wulstförmigen Dichtungsabschnitt 48 auf und ist am an den Entkopplungsabschnitt 42 angrenzenden Bereich mit zwei weiteren, nach oben und unten abragenden wulstförmigen Dichtungsabschnitn 50 und 50' versehen.

Wie man insbesondere aus Fig. 5 ersieht, ist im Entkopplungsbereich 42 durch zwei gegenüberliegende, gleichtiefe Ausnehmungen 52 im Grundkörper 36 eine relativ dünne Entkopplungsmembran 54 gebildet, die damit einen integralen Bestandteil des Grundkörpers 36 bildet. Im verdickten Zwischenabschnitt 44 ist - nach dem dargestellten Ausführungsbeispiel - von oben eine kreisringförmige Nut 56 rechteckigen Querschnitts eingeformt, die Volumen und Verlauf des eigentlichen Überströmkanals 32, der im einzelnen noch später beschrieben wird, bestimmt.

Wie man insbesondere aus Fig. 1 und 2 ersieht, sind die beiden Verstärkungsplatten 38 und 38' einander gegenüberliegend auf der Ober- und Unterseite des Grundkörpers 36 angeordnet und praktisch identisch. Die Platten 38 und 38' sind ringscheibenförmig mit jeweils einer zentralen Öffnung im Bereich der Entkopplungsmembran 54 ausgebildet und weisen im Übergangsbereich der Abschnitte 44 und 46 eine Abstufung oder Schulter auf. Ihr Durchmesser ist etwas kleiner als der Durchmesser des Grundkörpers 36, so daß die Platten 38 und 38' den wulstförmigen Dichtungsabschnitt 48 von innen zwar berühren, aber nicht überdecken.

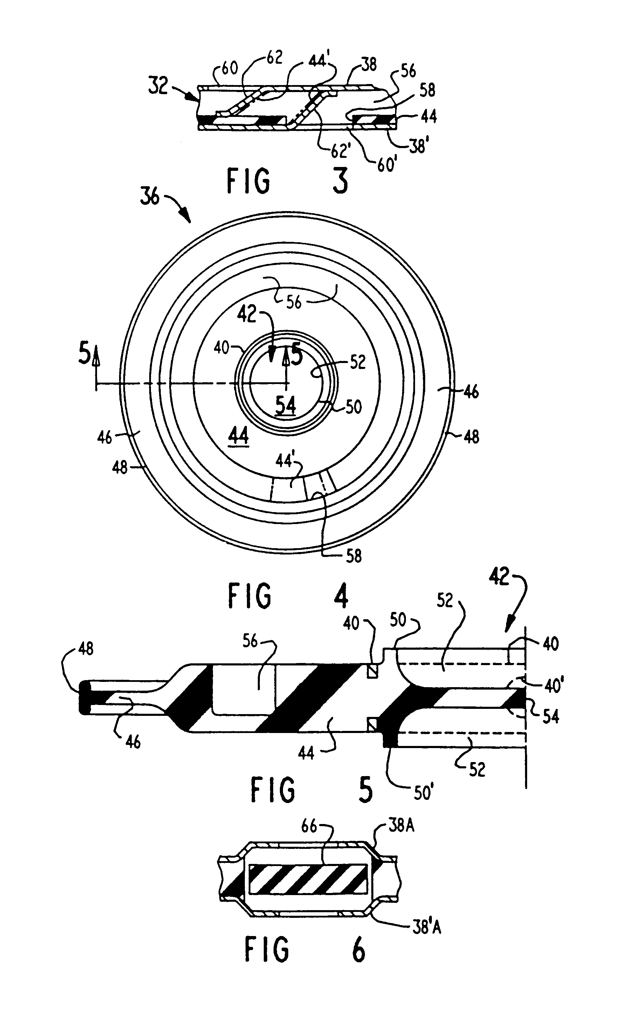

Wie man aus Fig. 2 und 3 ersieht, sind die Platten 38 und 38' im Bereich oberhalb bzw. unterhalb der Ausnehmung 56 mit rechteckigen Durchtrittsöffnungen 60 und 60' versehen, von denen sich schräge Leitvorrichtungen 62 und 62' ins Innere der Ausnehmung 56 erstrecken. Diese Leitvorrichtungen 62 und 62' werden zweckmäßigerweise gleichzeitig mit den Platten 38 und 38' in einem Arbeitsgang hergestellt, indem die Öffnungen 60 und 60' auf drei Seiten freigeschnitten und die stehendbleibenden Materialstege 62 bzw. 62' schräg abgewinkelt werden. Dabei bildet die Öffnung 60 die Überströmöffnung zur Arbeitskammer 28 und die Öffnung 60' die Überströmöffnung zur Ausgleichskammer 30. Bezüglich der Bildung der Überströmöffnung 60' ist - wie insbesondere aus Fig. 3 zu ersehen ist - ein entsprechender Materialabschnitt 58 am Grund der Nut 56 herausgeschnitten, um somit die eigentliche Durchtrittsöffnung zu bilden.

Strömungsturbulenzen in der Öffnung 60' zur Kammer 30 werden durch das Leitelement 62', das sich durch die Ausnehmung 56 hindurch im Winkel nach oben erstreckt und dessen freier Endabschnitt an der unteren Oberfläche der oberen Platte 38 anliegt, auf einem Minimum gehalten. Mit Ausnahme der Stelle, an der sich die Öffnung befindet, die eine Flüssigkeitsströmung zwischen der Arbeitskammer 28 und der Ausnehmung 56 ermöglicht, schließt somit die obere Platte 38 die offene Seite der Ausnehmung 56 ab und definiert damit den Überströmkanal 32 in der Zwischenplatte 22. Das Leitelement 62 in der Öffnung 60 erstreckt sich von der oberen Platte 38 im Winkel nach unten durch die Ausnehmung 56, wobei sein freies Ende fest am Boden der Ausnehmung 56 anliegt. Durch diesen festen Sitz und enge Toleranzen zwischen den vertikalen Seiten der Ausnehmung 56 und des Leitelements 62 kann nur wenig oder gar keine Flüssigkeit seitlich am Leitelement 62 vorbeifließen. Damit erfüllt das Leitelement 62 nicht nur die Funktion einer Verminderung von Strömungsturbulenzen, sondern es definiert auch das eine Ende des Überströmkanals 32.

Die in Fig. 3 gezeigte unterschiedliche Neigung der Leitelemente 62 und 62' ist darauf zurückzuführen, daß das Leitelement 62 wegen seiner Auflage auf dem Elastomermaterial der Grundfläche der Ausnehmung 56 einen geringeren vertikalen Raum zur Verfügung hat als das Leitelement 62' und daher auch flacher geneigt ist.

Eine bekannte Methode der Abstimmung derartiger hydraulisch dämpfener Lager zum Erreichen bestimmter Betriebscharakteristika besteht in der Veränderung der effektiven Länge des Überströmkanals. Das beschriebene Lager 10 läßt sich sehr einfach vor der endgültigen Montage der Zwischenplatte 22 abstimmen, indem einfach die relative Winkelstellung der oberen Platte 38 in Bezug auf den Grundkörper 36 justiert wird. Wenn z.B. eine kürzere effektive Länge des Überströmkanals 32, als in Fig. 2 gezeigt, gewünscht ist, wo die Bogenlänge mehr als 270° beträgt, so läßt sich dies einfach dadurch erreichen, daß die Platte 38 um den gewünschten Betrag im Uhrzeigersinn relativ zum Grundkörper 36 gedreht wird. Damit verändert sich auch entsprechend Fig. 3 die relative Lage der Leitkörper 62 und 62' zueinander, die maßgebend für die effektive Länge des Überströmkanals 32 sind.

Die gestufte Ausbildung der Platten 38 und 38' bewirkt, daß die auf die Zwischenplatte 22 ausgeübten Klemmkräfte nur an den Dichtungsabschnitten 48, 50 und 52 und am Montageabschnitt 46 des Grundkörpers 36 eine wesentliche Verformung hervorrufen. Der Montageabschnitt 46 wird dabei durch die auf ihn ausgeübten Druckkräfte radial nach außen gestaucht. Dies bewirkt, das die Dichtungswulst 48 des Grundkörpers 36 entsprechend der Darstellung in Fig. 1 gegen die Innenfläche des Seitenwandabschnittes 16' des Lagers einerseits und mit den peripheren Rändern der Platten 38 und 38' sicher abdichtend gegeneinander verpreßt ist. Die Dichtungswülste 50 und 50', die entsprechend Fig. 5 im nicht zusammengedrückten Zustand vertikal aus dem Grundkörper 36 hervorstehen, werden durch den Montagedruck so verformt, wie das in Fig. 1 gezeigt ist, so daß sie dicht mit den anliegenden Oberflächen der zentralen Bereiche der Platten 38 und 38' abschließen. Die übrigen Bereiche des Grundkörpers 36, insbesondere auch der Bereich 44 mit der nutförmigen Ausnehmung 56 für den Überströmkanal 32, werden bei der Montage nicht wesentlich zusammengepreßt. Dies ist auch sehr wünschenswert, da ein Zusammenpressen oder eine andere Verformung des Überströmkanals 32 die Betriebscharakteristik des Lagers ungünstig beeinflussen kann.

Zur zusätzlichen Versteifung kann wahlweise - wie in Fig. 4 und 5 dargestellt - noch ein Ring 40 im Übergangsbereich zwischen dem Entkopplungsbereich 42 und dem Überströmkanalbereich 44 in den Grundkörper 36 einvulkanisiert sein, um eine Übertragung von Spannungen, die beim Betrieb des Lagers durch senkrechte Schwingungen der Entkopplungsmembran 54 entstehen, auf den Bereich 44 des Grundkörpers 36 zu verhindern oder zumindest auf ein Minimum zu reduzieren. Darüber hinaus kann der Ring 40 auch als Abstandshalter bezüglich der Platten 38 und 38' dienen, um ein zusätzliches Zusammendrücken des Bereichs 44 zu verhindern. Dieser Ring 40 ist zweckmäßigerweise mit einer Vielzahl von radialen Öffnungen 40' versehen, um damit einen ungehinderten Materialfluß bei der Ausformung des Grundkörpers 36 zu ermöglichen.

Neben den dargestellten konstruktiven Ausgestaltungen ist es zur Begrenzung der effektiven Länge des Überströmkanals 32 wahlweise auch möglich, in der nutförmigen Ausnehmung 56 einen Elastomer-Materialabschnitt stehen zu lassen, wie das durch die gestrichelten Linien 44' in Fig. 3 und 4 dargestellt ist. Die Stirnflächen verlaufen dabei ebenfalls schräg geneigt, um Strömungswirbel zu vermeiden. Andererseits können dafür dann die gesonderten Leitvorrichtungen 62 und 62' der Platten 38 und 38' entfallen.

In einer weiteren Variante kann entsprechend Fig. 6 die vorstehend beschriebene Entkopplungsmembran 54 durch ein schwebend gelagertes scheibenförmiges Entkopplungselement 66 ersetzt werden, wobei die entsprechenden Platten 38 A und 38' A eine kleinere zentrale Öffnung aufweisen. Bei Schwingungen kleinerer Amplitude schwingt die Scheibe 66 frei zwischen den zentralen Öffnungen der Platten 38 A und 38' A, wobei die Flüssigkeit um die Ränder der Scheibe 66 herumströmen kann. Bei Schwingungungen großer Amplitude legt sich die Scheibe gegen eine der zentralen Öffnungen der Platten 38 A oder 38' A an, wodurch dann die Strömung durch den Entkopplerhohlraum abgesperrt ist.

**Patentansprüche**

1. Hydraulisch dämpfendes Lager (10) mit einer zumindest teilweise von einer gummielastischen Wandung (18) umgebenen Arbeitskammer (28) und einer Ausgleichskammer (30), die mit einer hydraulischen Flüssigkeit gefüllt sind und zwischen denen eine Zwischenplatte (22) aus einem einstückigen, elastomeren Grundkörper (36) mit einem radial außenliegenden, dickeren Bereich (44) und einem zentralen, bis auf die Dicke einer integralen Membran (54) eingezogenen Bereich (42) am äußeren Umfang eingespannt ist und einem kreisbogenförmigen Überströmkanal (32) zur hydraulischen Verbindung der beiden Kammern (28, 30) aufweist, dadurch gekennzeichnet, daß im äußeren, verdickten und scheibenförmig ausgebildeten Bereich (44) des elastomeren Grundkörpars (36) in eine seiner parallelen Oberflächen eine den Überströmkanal (32) bildende nutförmige Ausnehmung (56) eingelassen ist und daß dieser außenliegende, verdickte Bereich (44) von zwei ringscheibenförmigen Platten (38, 38') derart überdeckt ist, daß eine der Platten (38) auch die nutförmige Ausnehmung (56) überdeckt und damit den Überströmkanal (32) begrenzt, wobei beide Platten (38, 38') eine zentrale Ausnehmung von mindestens dem Durchmesser der Membran (54) aufweisen und im verdickten Bereich (44) eine die Durchbiegung des Überströmkanalbereichs (32) verhindernde Verstärkung bilden, und daß in eine der Platten (38) im Bereich der Ausnehmung (56) eine Überströmöffnung (60) zur Arbeitskammer (28) und in die andere Platte (38') eine Überströmöffnung (60') zur Ausgleichskammer (30) eingelassen sind, wobei letztere Überströmöffnung (60') sich an einen Durchbruch (58) im zwischen der Platte (38') und dem Grund der Ausnehmung (56) liegenden Elastomerbereich (44) anschließt.

2. Lager nach Anspruch 1, dadurch gekennzeichnet, daß in die Überströmöffnungen (60,60') schräg geneigte und bis zum Boden des Überströmkanals (32) reichende Leitvorrichtungen (62,62') eingesetzt sind.

3. Lager nach Anspruchs 2, dadurch gekennzeichnet, daß die Leitvorrichtungen (62,62') durch das auf drei Seiten freigeschnittene und schräg nach innen gebogene Material der jeweiligen Plattenöffnung (60,60') gebildet sind.

4. Lager nach Anspruch 1 bis 3, dadurch gekennzeichnet, daß die nutförmige Ausnehmung (56) sich kreisringförmig über 360° erstreckt und die in die Ausnehmung (56) ragenden Leitvorrichtungen (62,62') zwischen sich die Länge des Überströmkanals (32) begrenzen.

5. Lager nach Anspruch 4, dadurch gekennzeichnet, daß die relative Lage der Platten (38,38')

in Umfangsrichtung zueinander die Länge des Überströmkanals (32) bestimmt.

6. Lager nach Anspruch 1 bis 4, dadurch gekennzeichnet, daß die elastomere Zwischenplatte (36) radial von innen nach außen einen zentralen dünnen Membranbereich (54), einen verdickten Bereich (44) mit der nutförmigen Ausnehmung (56) für den Überströmkanal (32) und mit je einem ringförmigen, wulstförmigen Dichtungsvorsprung (50,50') im an die Membran (54) angrenzenden Bereich, einen Einspannbereich (46) verminderter Dicke und einen radial außenliegenden, wulstförmigen Dichtungsbereich (48) aufweist.

7. Lager nach Anspruch 1 und 6, dadurch gekennzeichnet, daß die entsprechend abgestuft profilierten ringscheibenförmigen Platten (38,38') radial den Einspannbereich (46) und den verdickten Bereich (44) bis einschließlich den wulstförmigen Dichtungsvorsprüngen (50,50') überdecken.

8. Lager nach Anspruch 7, dadurch gekennzeichnet, daß die Platten (38,38') am Außenumfang zwischen zwei umgebördelten Kanten (16') des Lagergehäuses (16) eingespannt sind.

9. Lager nach Anspruch 6, dadurch gekennzeichnet, daß radial innenliegend zum Überströmkanal (32) in den Elastomerkörper (36) ein umlaufender, metallischer Versteifungsring (40) mit über seinen Umfang verteilten radialen Durchbrüchen (40') und mit gleicher Höhe wie der Eleastomerkörper (36) einvulkanisiert ist.

## Claims

1. A hydraulic damping bearing (10) comprising a working chamber (28) which is at least partially surrounded by a rubber-elastic wall (18), and a compensating chamber (30), which are filled with a hydraulic fluid and between which an intermediate plate (22) comprising an integral, elastomeric main body (36) with a radially outer, thicker zone (44) and a central zone (42) drawn in to the thickness of an integral membrane (54), is clamped to the outer periphery, and a circular-arc-shaped overflow channel (32) which hydraulically connects the two chambers (28,30), characterised in that in the outer, thickened and disc-shaped zone (44) of the elastomeric main body (36), a groove-like recess (56) which forms the overflow channel (32) is inlet into one of its parallel surfaces, and that this outer, thickened zone (44) is covered by two ring-shaped plates (38,38') in such manner that one of the plates (38) also covers the groove-like recess (56) and thus delimits the overflow channel (32), where the two plates (38,38') contain a central recess whose diameter at least corresponds to that of the membrane (54), and in the thickened zone (44) form a reinforcement which prevents the deflection of the overflow channel zone (32), and that an overflow opening (60) to the working chamber (28) is inlet into one of the plates (38) in the region of the recess (56), and an overflow opening (60') to the compensating chamber (30) is inlet into the other plate (38'), where the latter overflow opening (60') adjoins an opening (58) in the elastomeric zone (44) located between the plate (38') and the base of the recess (56).

2. A bearing as claimed in claim 1, characterised in that obliquely inclined guide devices (62,62') which extend to the base of the overflow channel (32) are inserted into the overflow openings (60,60').

3. A bearing as claimed in claim 2, characterised in that the guide devices (62,62') are formed by the material of the respective plate openings (60,60'), which material is cut away on three sides and curves obliquely inwards.

4. A bearing as claimed in claims 1 to 3, characterised in that the groove-like recess (56) extends in the form of a circular ring over 360°, and the guide devices (62,62') which project into the recess (56) delimit, between them, the length of the overflow channel (32).

5. A bearing as claimed in claim 4, characterised in that the relative position of the plates (38,38') to one another in the peripheral direction determines the length of the overflow channel (32).

6. A bearing as claimed in claims 1 to 4, characterised in that the elastomeric intermediate plate (36) comprises, considered radially outwards, a central thin membrane zone (54), a thickened zone (44) with the groove-like recess (56) for the overflow channel (32) and with a respective ring-shaped, bead-like sealing projection (50,50') in the zone which adjoins the membrane (54), a clamping zone (46) of reduced thickness and a radially outer, bead-like sealing zone (48).

7. A bearing as claimed in claims 1 and 6, characterised in that the ring-shaped plates (38,38') which are provided with an appropriately stepped profile radially cover the clamping zone (46) and the thickened zone (44) up to and including the bead-like sealing projections (50,50').

8. A bearing as claimed in claim 7, characterised in that the plates (38,38') are clamped at the outer periphery between two flanged edges (16') of the bearing housing (16).

9. A bearing as claimed in claim 6, characterised in that radially inwards in relation to the overflow channel (32) a circumferential, metallic stiffening ring (40) which has radial openings (40') distributed over its circumference and which is of the same height as the elastomeric body (36) is vulcanised into the elastomeric body (36).

**Revendications**

1. Support (10) à amortissement hydraulique, comprenant une chambre de travail (28) entourée d'une paroi ayant l'élasticité du caoutchouc et une chambre de compensation (30), qui sont emplies d'un liquide hydraulique et entre lesquelles est sertie par son pourtour extérieur un corps de base (36) en élastomère, d'un seul tenant, ayant radialement à l'extérieur une partie plus épaisse (44) et une partie centrale (42) ramenée à l'épaisseur d'une membrane (54) intégrée, et qui comporte un canal de passage (32) en forme d'arc de cercle pour la mise en communication hydraulique des deux chambres (28, 30), caractérisé en ce que dans la partie extérieure épaissie (44) et en forme de disque du corps de base (36) en élastomère est ménagée, dans l'une de ses surfaces parallèles, un évidement (56) en forme de rainure et formant le canal de passage (32) et en ce que cette partie extérieure et épaissie (44) est recouverte de deux plaques (38, 38') en forme de disque annulaire de sorte que l'une des plaques (38) recouvre aussi l'évidement (56) en forme de rainure et délimite ainsi le canal de passage (32), les deux plaques (38, 38') comportant une ouverture centrale ayant au moins le diamètre de la membrane (54) et formant, dans la partie épaissie (44), un renforcement empêchant la partie du canal de passage (32) de fléchir, et en ce qu'il est ménagé dans l'une des plaques (38), dans la partie de l'évidement (56), un orifice de passage (60) vers la chambre de travail (28) et, dans l'autre plaque (38'), un orifice de passage (60') vers la chambre de compensation, ce dernier orifice de passage (60') se raccordant à une ouverture (58) dans la partie (44) en élastomère comprise entre la plaque (38') et le fond de l'évidement (56).

2. Support suivant la revendication 1, caractérisé en ce que, dans les orifices de passage (60, 60') sont introduits des dispositifs de guidage (62, 62') inclinés et s'étendant jusqu'au fond du canal de passage (32).

3. Support suivant la revendication 2, caractérisé en ce que les dispositifs de guidage (62, 62') sont formés par le matériau de l'orifice de passage (60, 60') découpé sur trois côtés et coudé de manière inclinée vers l'intérieur.

4. Support suivant l'une des revendications 1 à 3, caractérisé en ce que l'évidement (56) en forme de rainure s'étend en forme d'anneau de cercle sur 360° et les dispositifs de guidage (62, 62') pénétrant dans la rainure (56) délimitent entre eux la longueur du canal de passage (32).

5. Support suivant la revendication 4, caractérisé en ce que la position relative des plaques (38, 38') dans la direction périphérique détermine la longueur du canal de passage (32).

6. Support suivant l'une des revendications 1 à 4, caractérisé en ce que la plaque intermédiaire (36) en élastomère comporte radialement, de l'intérieur vers l'extérieur, une partie centrale à membrane mince (54), une partie (44) épaissie ayant l'évidement (56) en forme de rainure pour le canal de passage (32) et un bourrelet saillant d'étanchéité (50, 50') de forme annulaire dans la partie adjacente à la membrane (54), une partie destinée à être coincée (46) et de moindre épaisseur, et un bourrelet d'étanchéité (48) se trouvant radialement à l'extérieur.

7. Support suivant la revendication 1 ou 6, caractérisé en ce que les plaques (38, 38'), en forme de disque annulaire et à épaulement adéquat, recouvrent radialement la partie (46), destinée à être coincée et la partie (44) épaissie jusque et y compris les bourrelets d'étanchéité (50, 50').

8. Support suivant la revendication 7, caractérisé en ce que les plaques (38, 38') sont coincées à la périphérie extérieure entre deux bords (16') rabattus du carter du support (16).

9. Support suivant la revendication 6, caractérisé en ce qu'un anneau (40) métallique de renforcement, faisant tout le tour, ayant des passages radiaux (40') répartis sur son pourtour et de même hauteur que le corps (36) en élastomère, est vulcanisé dans le corps (36) en élastomère en se trouvant radialement à l'intérieur, par rapport au canal de passage (32).

FIG 1

FIG 2

EP 0 231 898 B1

FIG 3

FIG 4

FIG 5

FIG 6